# EUROPÄISCHE PATENTSCHRIFT

(11) **EP 1 732 076 B1**
(45) Veröffentlichungstag und Bekanntmachung des Hinweises auf die Patenterteilung: **02.04.2008**
(21) Anmeldenummer: 05012442.9
(22) Anmeldetag: 09.06.2005
(51) Int. Cl.: G11B 17/04

(54) **Einbaugerät für ein Kraftfahrzeug**
Built-in apparatus for a vehicle
Appareil à encastrer pour véhicule

(43) Veröffentlichungstag der Anmeldung: 13.12.2006
(73) Patentinhaber: Delphi Technologies, Inc., Troy, MI 48007 (US)
(72) Erfinder: Slawik, Ralf, 91126 Schwabach (DE); Schirmer, Thorsten, 90049 Nürnberg (DE)
(74) Vertreter: Manitz, Finsterwald & Partner GbR

(56) Entgegenhaltungen:
- US-A- 4 677 607
- US-A- 5 793 728
- US-A1- 2004 001 416
- US-A1- 2005 066 344

## Beschreibung

Die vorliegende Erfindung betrifft ein Einbaugerät für ein Kraftfahrzeug mit einer Frontblende, in der ein Schlitz für einen digitalen Datenträger vorgesehen ist. Beispielsweise kann es sich bei dem Einbaugerät um ein Autoradio mit integriertem CD- oder DVD-Spieler handeln. Auch Navigationsgeräte, die auf einer CD-ROM, einer DVD oder einem anderen Medium gespeicherte Landkartendaten einlesen und verwenden können, sind als Anwendung denkbar.

An der Rückseite der Frontblende ist im Allgemeinen ein ebenfalls mit einem Schlitz versehener Führungsrahmen angebracht, wobei die beiden Schlitze miteinander ausgerichtet sind, so dass der digitale Datenträger eingeführt werden kann. Die Erfindung betrifft neben dem Einbaugerät auch ein Verfahren zur Montage eines solchen Führungsrahmens an einer Frontblende für ein solches Einbaugerät.

Bei den bisher bekannten Einbaugeräten dieser Art wird zur Montage des Führungsrahmens an der Rückseite der Frontblende eine Ultraschallschweißvorrichtung verwendet. Der Führungsrahmen wird zunächst in der Blende vormontiert, und anschließend wird die vormontierte Baugruppe in die Schweißvorrichtung eingelegt. Nach dem Schweißvorgang kann die nun miteinander verschweißte Baugruppe aus Blende und Führungsrahmen aus der Ultraschallschweißvorrichtung entnommen werden. Diese Bauweise hat verschiedene Nachteile. Zum einen ist die Montage vergleichsweise langwierig, da mehrere Arbeitsschritte hintereinander durchgeführt werden müssen. Gleichzeitig ist die Montage auch teuer, da eine kostspielige Ultraschallschweißvorrichtung verwendet werden muss. Schließlich ist zum Verschweißen des Führungsrahmens an der Blende eine ausreichend große Kontaktfläche nötig, an der der Führungsrahmen auf der Rückseite der Blende aufliegt. Diese Fläche ist für die Frontblende nur bedingt nutzbar und steht beispielsweise nicht für ein Display zur Verfügung.

Dokument US-A-2004/0001416, das als nächstliegender Stand der Technik angesehen wird, offenbart ein Beispiel der Verwendung einer Schweißvorrichtung zur Montage des Führungsrahmens an der Blende.

Es ist daher die Aufgabe der vorliegenden Erfindung, ein Einbaugerät der eingangs genannten Art und ein dazugehöriges Montageverfahren zur Verfügung zu stellen, welche die oben genannten Nachteile überwinden. Insbesondere soll ein möglichst großer Bereich der Oberfläche der Frontblende für ein Display zur Verfügung stehen, und die Montage des Führungsrahmens an der Frontblende soll kostengünstiger und schneller erfolgen können.

Diese Aufgabe wird durch ein Einbaugerät nach Anspruch 1 und ein Verfahren nach Anspruch 10 gelöst.

Das erfindungsgemäße Einbaugerät für ein Kraftfahrzeug mit einer Frontblende weist einen an dieser Frontblende von deren Rückseite aus verrastbar aufsteckbaren Führungsrahmen mit einem Schlitz für einen digitalen Datenträger auf.

Bei dem erfindungsgemäßen Verfahren zur Montage eines solchen Führungsrahmens an einer Frontblende wird dieser Führungsrahmen an der Rückseite der Frontblende aufgesteckt und dabei mit an der Rückseite der Frontblende vorgesehenen Rastelementen verrastet.

Die Montage des Führungsrahmens an der Frontblende kann somit mit einem einzigen Handgriff durchgeführt werden, was zu einer deutlichen Zeitersparnis führt. Da keine Ultraschallschweißvorrichtung benötigt wird, werden zudem die Herstellungskosten des erfindungsgemäßen Einbaugeräts im Vergleich zum Stand der Technik gesenkt. Des weiteren kann die Rastverbindung zwischen dem Führungsrahmen und der Frontblende auch ohne die für das Ultraschallschweißen nötigen Kontaktflächen realisiert werden, so dass mehr Platz für ein Display zur Verfügung steht.

Vorteilhafte Ausführungsformen der Erfindung sind in den Unteransprüchen sowie der Beschreibung in Verbindung mit den beigefügten Figuren beschrieben.

Nach einer bevorzugten Ausführungsform weist die Frontblende an ihrer Rückseite vorspringende Rastlaschen auf, welche in an dem Führungsrahmen außenseitig ausgebildete korrespondierende Aufnahmekanäle einsteckbar sind und in diesen verrasten. Durch die zu den Rastlaschen passenden Aufnahmekanäle kann eine stabile Rastverbindung hergestellt werden, welche den Führungsrahmen insbesondere gegen ein seitliches Verrutschen oder Verschieben sichert. Zudem ist das Montieren des Führungsrahmens an der Frontblende sehr einfach, da er lediglich so auf die Rückseite der Frontblende aufgesetzt werden muss, dass die an der Rückseite der Frontblende vorspringenden Rastlaschen mit den Aufnahmekanälen ausgerichtet sind. Die Rastlaschen werden dann in den Aufnahmekanälen geführt und verrasten schließlich automatisch in diesen, so dass der Führungsrahmen auch gegen ein Abziehen in Richtung einer Einsteckrichtung des digitalen Datenträgers gesichert ist.

Nach einer vorteilhaften Ausführungsform der Erfindung sind an dem Führungsrahmen Rastnasen ausgebildet, welche in korrespondierenden Aussparungen von an der Rückseite der Frontblende vorgesehenen, vorstehenden Rastlaschen verrastbar sind. Eine solche Konstruktion bietet eine einfache und zuverlässige Möglichkeit, den Führungsrahmen an der Frontblende zu befestigen.

Beispielsweise kann nach einer bevorzugten Ausführungsform der Erfindung jeweils an einer Wand von an dem Führungsrahmen außenseitig ausgebildeten Aufnahmekanälen eine elastische, ins Kanalinnere weisende Rastnase vorgesehen sein. Wenn die Aufnahmekanäle, wie oben bereits erwähnt, mit an der Rückseite der Frontblende vorspringenden Rastlaschen zusammenwirken, welche in die Aufnahmekanäle einsteckbar sind, können diese Rastlaschen mit Hilfe der Rastnasen in den Aufnahmekanälen verrastet werden. Als Gegenstück zu den Rastnasen dienen dabei korrespondierende Aussparungen in den Rastlaschen, in welche die Rastnasen einrasten. Bei der Montage des Führungsrahmens an der Rückseite der Frontblende werden also die an dem Führungsrahmen vorgesehenen Aufnahmekanäle auf die an der Frontblende vorgesehenen Rastlaschen aufgesteckt, und die Rastnasen schnappen dann in die Öffnungen der Rastlaschen ein, so dass der Führungsrahmen fest an der Rückseite der Frontblende sitzt.

Bei dem Führungsrahmen kann es sich um ein in einem Spritzgussverfahren hergestelltes Kunststoffteil handeln, wobei die Aufnahmekanäle dann einstückig mit dem Führungsrahmen ausgebildet sein können. Auch die Rastlaschen an der Frontblende sind vorzugsweise mit dieser einstückig ausgebildet.

Nach einer vorteilhaften Ausführungsform der Erfindung kann jeweils eine Wand des Schlitzes für einen digitalen Datenträger gleichzeitig eine Wand der Aufnahmekanäle bilden. Auf diese Weise werden möglichst wenig Platz und Material für die Aufnahmekanäle verbraucht, da diese direkt außenseitig an den Längsseiten des Schlitzes sitzen. Zudem kann der gesamte Führungsrahmen vergleichsweise einfach gegossen werden. Die Aufnahmekanäle verstärken im Übrigen bei dieser Ausführungsform gleichzeitig die Wände des Schlitzes, so dass dieser weniger leicht verbogen oder anderweitig verformt werden kann.

Nach einer weiteren vorteilhaften Ausführungsform der Erfindung können die Rastlaschen im Wesentlichen jeweils die Form einer rechteckigen Platte besitzen. Durch diese Form der Rastlaschen wird ebenfalls die Stabilität der gesamten Baugruppe erhöht, insbesondere dann, wenn dementsprechend geformte Aufnahmekanäle an dem Führungsrahmen vorgesehen sind. Da der Führungsrahmen eine lang gestreckte Form besitzt und zudem im Allgemeinen aus einem vergleichsweise weichen Kunststoffmaterial besteht, kann nämlich das Problem auftreten, dass der in dem Führungsrahmen ausgebildete Schlitz und/oder der gesamte Rahmen verbogen oder verformt werden. Wenn an dem Führungsrahmen nun Aufnahmekanäle zur Aufnahme solcher Rastlaschen in Form rechteckiger Platten vorgesehen sind, bilden diese Rastlaschen eine Verstärkung für die Wände des in dem Rahmen ausgebildeten Schlitzes und die Formstabilität des Führungsrahmens kann deutlich erhöht werden.

Vorzugsweise besitzen die Rastlaschen in einer Richtung senkrecht zur Einsteckrichtung des Datenträgers eine Erstreckung, die in etwa der Erstreckung des Führungsrahmens in dieser Richtung entspricht. Der Führungsrahmen wird somit von den Rastlaschen nicht nur gehalten sondern auch über seine gesamte Erstreckung in Richtung senkrecht zur Einsteckrichtung des Datenträgers stabilisiert. Selbstverständlich können die Rastlaschen auch eine geringere Erstreckung in die genannte Richtung besitzen als der Führungsrahmen.

Nach einer vorteilhaften Weiterbildung der Erfindung weist der Führungsrahmen in einer senkrecht zur Einsteckrichtung des Datenträgers verlaufenden Sockelfläche Öffnungen auf, durch welche auf der Rückseite der Frontblende vorgesehene Zapfen durchgesteckt werden können. Bereits eine kleine Sockelfläche reicht aus, um solche Öffnungen vorzusehen, und kann zudem auch zur Stabilisierung des Führungsrahmens beitragen. Die Zapfen bieten eine zusätzliche Sicherung gegen seitliches Verschieben, wenn sie durch die Öffnungen in der Sockelfläche durchgesteckt sind, und erleichtern bereits beim Aufstecken des Führungsrahmens die korrekte Ausrichtung. Die Zapfen können beispielsweise als einfache zylindrische Stäbe oder auch pilzförmig ausgebildet sein, wobei sie in letzterem Fall eine zusätzliche Sicherung gegen Abziehen des Führungsrahmens von der Frontblende darstellen.

Vorzugsweise sind an zwei sich gegenüberliegenden Längsseiten des Führungsrahmens jeweils versetzt zueinander mehrere gleichartige Verrastmittel vorgesehen. Beispielsweise können an jeder Längsseite des Führungsrahmens, das heißt an jeder Längsseite des Schlitzes zur Aufnahme eines digitalen Datenträgers, jeweils mehrere Aufnahmekanäle vorgesehen sein, wobei die Aufnahmekanäle an den sich gegenüberliegenden Längsseiten einander nicht gegenüberliegen, sonder zueinander seitlich versetzt sind. Durch diese Anordnung wird die Formstabilität des Führungsrahmens optimiert. Zusätzlich kann jeweils zwischen zwei Führungskanälen an einer Sockelfläche eine Öffnung vorgesehen sein, wie sie oben bereits beschrieben wurde. Beispielsweise können pro Längsseite des Schlitzes drei bis vier Aufnahmekanäle und zwischen diesen eine ähnliche Anzahl von Öffnungen vorgesehen sein. Wie oben bereits erwähnt, sind die Verrastmittel vorzugsweise relativ breit ausgebildet, das heißt mit einer vergleichsweise großen Erstreckung in Längsrichtung des Führungsrahmens, so dass sie die Formstabilität des Führungsrahmens erhöhen können.

Im Folgenden soll die Erfindung anhand eines bevorzugten Ausführungsbeispiels und unter Bezugnahme auf die beiden beigefügten Figuren genauer beschrieben werden. Dabei zeigen die Figuren:
- Fig. 1:: eine perspektivische Ansicht der Rückseite einer Frontblende und eines noch nicht montierten Führungsrahmens; und
- Fig. 2:: eine Querschnittsansicht der Frontblende aus der Fig. 1 mit montiertem Führungsrahmen.

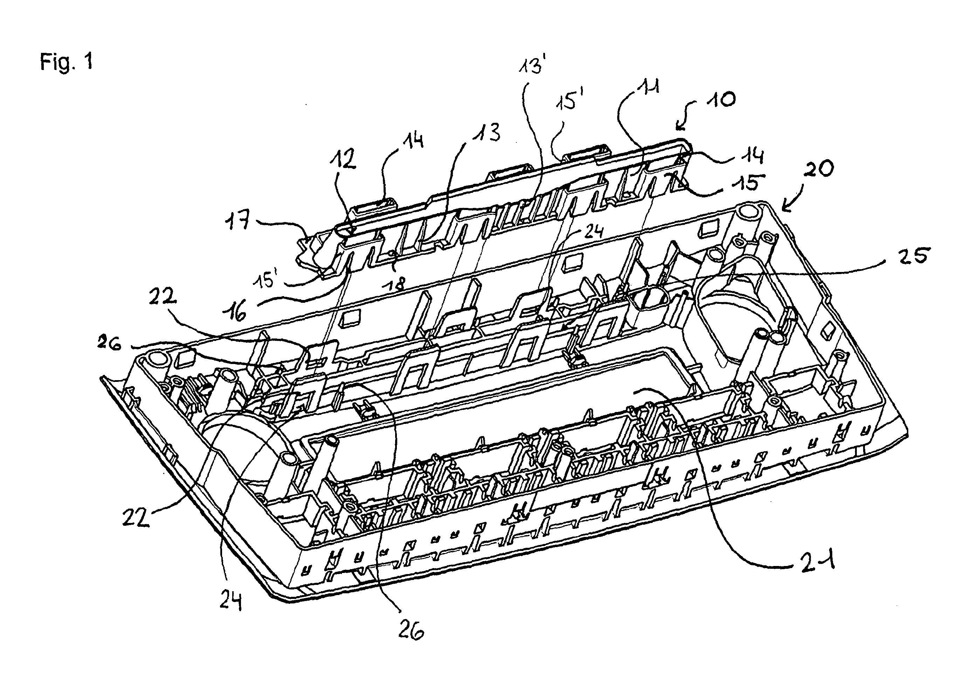

In der Fig. 1 ist die gesamte Frontblende 20 von ihrer Rückseite aus gesehen perspektivisch dargestellt. Die dargestellte Frontblende 20 kann beispielsweise als Frontblende für einen in einem Fahrzeug einbaubaren CD-Spieler dienen und ist aus Kunststoff gegossen.

In der Frontblende 20 ist ein Schlitz 25 zum Einführen eines digitalen Datenträgers, beispielsweise einer CD, ausgebildet. Parallel zu diesem Schlitz 25 erstreckt sich in dessen Nachbarschaft ein Display 21, auf welchem dem Benutzer verschiedene Informationen angezeigt werden können. Da derartige Frontblenden an sich bekannt sind, sollen im Folgenden nur die für die Erfindung relevanten, zum Aufstecken eines Führungsrahmens 10 dienenden Bauteile beschrieben werden, durch die die dargestellte Frontblende 20 sich von den aus dem Stand der Technik bekannten Frontblenden unterscheidet.

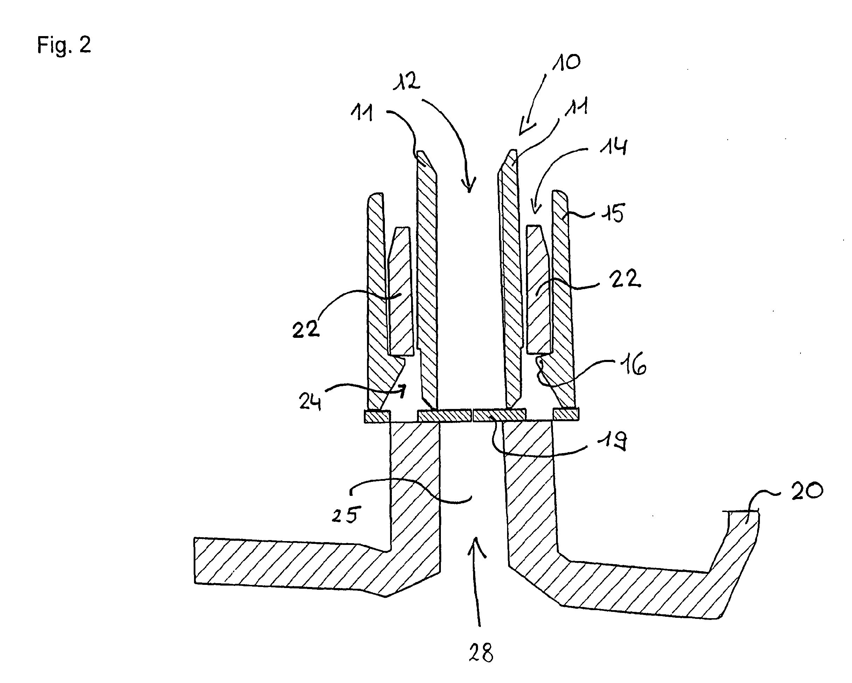

Der in der Fig. 1 getrennt von der Frontblende 20 dargestellte Führungsrahmen 10 bildet einen Rahmen für einen in seiner Mitte ausgebildeten Schlitz 12 für einen digitalen Datenträger, und besitzt somit eine lang gestreckte Form. Es handelt sich um ein in einem Spritzgussverfahren hergestelltes Kunststoffteil. In der Fig. 1 ist der Führungsrahmen 10 oberhalb seiner Montageposition dargestellt, wie durch vertikal verlaufende Linien angedeutet ist. Wenn der Führungsrahmen 10 an der Frontblende 20 montiert ist, ist sein Schlitz 12 mit dem Schlitz 25 der Frontblende 20 ausgerichtet, wie man in der Querschnittsansicht der Fig. 2 erkennt. Ein digitaler Datenträger, beispielsweise eine CD, kann somit in Richtung des Pfeils 28 (vgl. Fig. 2) durch den Schlitz 25 in der Frontblende 20 und dann durch den Schlitz 12 in dem Führungsrahmen 10 in ein hinter der Frontblende 20 liegendes Lesegerät eingeführt werden.
Die Tiefe des Schlitzes 12 und somit auch die Tiefe des gesamten Führungsrahmens 10 entsprechen in etwa der Tiefe der Frontblende 20.

An beiden Längsseiten des Führungsrahmens 10 sind an den Schlitz 12 begrenzenden Längswänden 11 außenseitig Aufnahmekanäle 14 ausgebildet. Eine innenseitige Wand der Aufnahmekanäle 14 wird dabei jeweils durch die Längswand 11 des Schlitzes 12 gebildet. Eine gegenüber liegende, jeweils parallel zu den Längswänden 11 des Schlitzes 12 verlaufende außenseitige Wand 15 der Aufnahmekanäle 14 und zwei senkrecht dazu verlaufende und um ein Vielfaches kürzere Seitenwände 15' sind zur Bildung der Aufnahmekanäle 14 an die Längswände 11 des Schlitzes 12 angeformt. Insgesamt besitzen die Aufnahmekanäle 14 einen rechteckigen Querschnitt und verlaufen parallel zu einer Einsteckrichtung 28 (vgl. Fig. 2) eines Datenträgers, der in den Schlitz 12 eingeführt wird.

An der in Fig. 1 in Richtung des Betrachters liegenden Seite des Schlitzes 12 sind vier solche Aufnahmekanäle 14 vorgesehen, wobei zwei derselben jeweils an den seitlichen Enden des Schlitzes 12 liegen, und die beiden anderen Aufnahmekanäle 14 dazwischen angeordnet sind.

An der gegenüberliegenden Längsseite des Schlitzes 12 sind lediglich drei Aufnahmekanäle 14 vorgesehen, wobei die Aufnahmekanäle 14 an den beiden einander gegenüberliegenden Längsseiten in Längsrichtung gegeneinander versetzt angeordnet sind.

Der Schlitz 12 ist an seiner in Richtung der Frontblende 20 weisenden Seite rahmenartig von einer schmalen Sockelfläche 17 umgeben, die parallel zu einer Grundfläche der Frontblende 20 und somit senkrecht zu der Einsteckrichtung 28 für einen Datenträger verläuft. Diese Sockelfläche 17 bildet an den Längsseiten des Schlitzes 12 einen Streifen, der jeweils zwischen den Aufnahmekanälen 14 verläuft. Die Tiefe der Sockelfläche 17 entspricht dabei der Länge der Seitenwände 15' der Aufnahmekanäle 14, so dass die Sockelfläche 17 außenseitig bündig mit den außenseitigen Wänden 15 der Aufnahmekanäle 14 abschließt. Da die Sockelfläche 17 vergleichsweise schmal ist, kann das Display 21 der Frontblende größer ausgebildet werden, als dies bei einer Frontblende mit einem verschweißten Führungsrahmen der Fall ist.

Wie man in Fig. 1 für die in der Figur in Richtung des Betrachters liegende Längswand 11 erkennt, sind zwischen den Aufnahmekanälen 14 an beiden Längswänden 11 des Schlitzes 12 Verstärkungsrippen 13, 13' angeformt, die sich von der Sockelfläche 17 aus parallel zu den Aufnahmekanälen 14 bis zum oberen Ende der Längswand 11 des Schlitzes 12 erstrecken. Es sind sowohl sich von der Sockelfläche 17 aus nach oben verjüngende Verstärkungsrippen 13, als auch Verstärkungsrippen 13' mit über ihre gesamte Länge konstantem Querschnitt vorgesehen.

In der Sockelfläche 17 sind zudem zwischen den Aufnahmekanälen 14 und zwischen den Verstärkungsrippen 13, 13' auf beiden Längsseiten des Führungsrahmens 10 Öffnungen 18 mit kreisförmigem Querschnitt ausgebildet, durch welche an der Frontblende 20 rückseitig vorstehende zylindrische Zapfen 26 hindurch gesteckt werden können.

An der Rückseite der Frontblende 20 sind zudem Rastlaschen 22 vorstehend ausgebildet, welche in die Aufnahmekanäle 14 des Führungsrahmens 10 eingesteckt werden können. Diese Rastlaschen 22 sind analog zu der Anordnung der Aufnahmekanäle 14 an den Längsseiten des Schlitzes 12 an den Längsseiten des Schlitzes 25 in der Frontblende 20 angeordnet. Sie besitzen im Wesentlichen die Form rechteckiger Platten, wobei in jeder Rastlasche 22 an deren Fuß, das heißt an der Grundfläche der Frontblende 20, mittig eine ebenfalls rechteckige Aussparung 24 vorgesehen ist.

Insgesamt erinnert die Form jeder Rastlasche 22 damit an einen flach ausgebildeten Türrahmen. Wie man in Fig. 1 erkennen kann, verjüngen die Rastlaschen 22 sich geringfügig an ihrem oberen, von der Frontblende 20 weg weisenden Ende. Diese Verjüngung ist im Querschnitt in der Fig. 2 noch besser erkennbar und erleichtert das Einstecken der Rastlaschen 22 in die Aufnahmekanäle 14, wie weiter unten klar werden wird.

Wie man für die in Richtung des Betrachters liegenden Aufnahmekanäle 14 in der Fig. 1 gut erkennt, sind die außenseitigen Wände 15 des Aufnahmekanals jeweils mit zwei parallel zur Einsteckrichtung 28 eines Datenträgers verlaufenden schlitzartigen Ausnehmungen versehen, die in Richtung der Frontblende 20 offen sind und sich jeweils über einen Großteil der Wand 15 erstrecken. Zwischen diesen zwei parallelen Ausnehmungen ist somit eine flexible Zunge gebildet. An deren unterem Ende, das heißt an dem in Richtung der Frontblende liegenden Ende der Wand 15, ist jeweils eine ins Innere des Aufnahmekanals 14 weisende Rastnase 16 ausgebildet, welche im Profil in Fig. 2 erkennbar ist.

Zur Montage des Führungsrahmens 10 wird dieser so auf der Rückseite der Frontblende 20 aufgesteckt, dass die Rastlaschen 22 in die Aufnahmekanäle 14 eingeführt werden. Gleichzeitig werden dabei die Zapfen 26 durch die in der Sockelfläche 17 des Führungsrahmens 10 ausgebildeten Öffnungen 18 gesteckt. Die ins Innere der Aufnahmekanäle 14 zeigenden Rastnasen 16 an den äußeren Wänden 15 der Aufnahmekanäle 14 werden dann von den sich nach oben verjüngenden Rastlaschen 22 nach außen gedrückt und schnappen schließlich in die Ausnehmungen 24 in den Rastlaschen 22 ein.

In Fig. 2 ist der montierte Führungsrahmen 10 mit dem darunter liegenden Bereich der Frontblende 20 und deren Rastlaschen 22 im Querschnitt gezeigt. Der obere, quer verlaufende Bereich der Rastlaschen 22 und die darunter liegende Ausnehmung 24 sind zu sehen, und man erkennt, dass die an den äußeren Wänden 15 der Aufnahmekanäle 14 ausgebildeten, ins Innere der Aufnahmekanäle 14 weisenden Rastnasen 16 in die Ausnehmungen 24 eingeschnappt sind, so dass der Führungsrahmen 10 fest an der Rückseite der Frontblende 20 sitzt.

Der Schlitz 12 in dem Führungsrahmen 10 ist in Richtung der Frontblende 20 durch eine verschiebbare Abdeckung 19 aus Filz geschützt, welche beim Einschieben einer CD oder DVD zur Seite geschoben wird und den Schlitz 12 freigibt.

### Bezugszeichenliste

- 10: Führungsrahmen
- 11: Längswand des Schlitzes 12
- 12: Schlitz für digitalen Datenträger
- 13, 13': Verstärkungsrippen
- 14: Aufnahmekanal
- 15: außenseitige Wand der Aufnahmekanäle 14
- 15': Seitenwand der Aufnahmekanäle 14
- 16: Rastnase
- 17: Sockelfläche
- 18: Öffnung
- 19: verschiebbare Abdeckung des Schlitzes 12
- 20: Frontblende
- 21: Display
- 22: Rastlaschen
- 24: Ausnehmungen in den Rastlaschen 22
- 25: Schlitz in der Frontblende 20
- 26: Zapfen
- 28: Einsteckrichtung des digitalen Datenträgers

## Patentansprüche

1. Einbaugerät für ein Kraftfahrzeug mit einer Frontblende (20) und einem an dieser Frontblende (20) von deren Rückseite aus aufsteckbaren Führungsrahmen (10) mit einem Schlitz (12) für einen digitalen Datenträger **dadurch gekennzeichnet daß** der Führungsrahmen verrastbar ist.

2. Einbaugerät nach Anspruch 1,
**dadurch gekennzeichnet,**
**dass** die Frontblende (20) an ihrer Rückseite vorspringende Rastlaschen (22) aufweist, welche in an dem Führungsrahmen (10) außenseitig ausgebildete korrespondierende Aufnahmekanäle (14) einsteckbar sind und in diesen verrasten.

3. Einbaugerät nach Anspruch 1 oder 2,
**dadurch gekennzeichnet,**
**dass** an dem Führungsrahmen (10) Rastnasen (16) ausgebildet sind, welche in korrespondierenden Aussparungen (24) von an der Rückseite der Frontblende (20) vorgesehenen, vorstehenden Rastlaschen (22) verrastbar sind.

4. Einbaugerät nach Anspruch 2,
**dadurch gekennzeichnet,**
**dass** jeweils an einer Wand (15) der Aufnahmekanäle (14) eine elastische, ins Kanalinnere weisende Rastnase (16) ausgebildet ist, und die Rastlaschen (22) der Frontblende (20) korrespondierende Aussparungen (24) aufweisen, in denen diese Rastnasen (16) verrastbar sind.

5. Einbaugerät nach Anspruch 2 oder 4,
**dadurch gekennzeichnet,**
**dass** jeweils eine Längswand (11) des Schlitzes (12) für einen digitalen Datenträger gleichzeitig eine Wand (11) der Aufnahmekanäle (14) bildet.

6. Einbaugerät nach einem der Ansprüche 2 bis 5,
**dadurch gekennzeichnet,**
**dass** die Rastlaschen (22) im Wesentlichen die Form einer rechteckigen Platte besitzen.

7. Einbaugerät nach einem der Ansprüche 2 bis 6,
**dadurch gekennzeichnet,**
**dass** die Rastlaschen (22) in eine Richtung senkrecht zur Einsteckrichtung (28) des Datenträgers eine Erstreckung besitzen, die in etwa der Erstreckung des Führungsrahmens (10) in diese Richtung entspricht.

8. Einbaugerät nach einem der vorstehenden Ansprüche,
**dadurch gekennzeichnet,**
**dass** der Führungsrahmen (10) in einer senkrecht zur Einsteckrichtung (28) des Datenträgers verlaufenden Sockelfläche (17) Öffnungen (18) aufweist, durch welche auf der Rückseite der Frontblende (20) vorgesehene Zapfen (26) durchsteckbar sind.

9. Einbaugerät nach einem der vorstehenden Ansprüche,
**dadurch gekennzeichnet,**
**dass** an zwei sich gegenüberliegenden Längsseiten des Führungsrahmens (10) jeweils versetzt zueinander mehrere gleichartige Verrastmittel (14, 18) vorgesehen sind.

10. Verfahren zur Montage eines Führungsrahmens (10) mit einem Schlitz (12) für einen digitalen Datenträger an einer Frontblende (20) für ein Einbaugerät zum Einbau in einem Kraftfahrzeug, **dadurch gekennzeichnet daß** der Führungsrahmen (10) an der Rückseite der Frontblende (20) aufgesteckt wird und dabei mit an der Rückseite der Frontblende (20) vorgesehenen Rastelementen (22) verrastet.

## Claims

1. A built-in device for a motor vehicle comprising a front panel (20) and a guide frame (10) with a slot (12) for a digital data carrier, the guide frame being able to be plugged onto this front panel (20) from its rear side,
**characterized in that**
the guide frame is latchable.

2. A built-in device in accordance with claim 1, **characterized in that** the front panel (20) has projecting latch tabs (22) at its rear side which are insertable into and latch in corresponding receiving passages (14) formed at the outside at the guide frame (10).

3. A built-in device in accordance with claim 1 or claim 2, **characterized in that** latch noses (16) are formed at the guide frame (10) which are latchable in corresponding cut-outs (24) of projecting latch noses (22) provided at the rear side of the front panel (20).

4. A built-in device in accordance with claim 2, **characterized in that** a respective resilient latch nose (16) facing into the interior of the passage is formed at a wall (15) of the receiving passages (14); and **in that** the latch tabs (22) of the front panel (20) have corresponding cut-outs (24) in which these latch noses (16) are latchable.

5. A built-in device in accordance with claim 2 or claim 4, **characterized in that** a respective longitudinal wall (11) of the slot (12) for a digital data carrier simultaneously forms a wall (11) of the receiving passages (14).

6. A built-in device in accordance with any one of the claims 2 to 5, **characterized in that** the latch tabs (22) substantially have the shape of a rectangular plate.

7. A built-in device in accordance with any one of the claims 2 to 6, **characterized in that** the latch tabs (22) have an extent in a direction perpendicular to the insertion direction (28) of the data carrier which approximately corresponds to the extent of the guide frame (10) in this direction.

8. A built-in device in accordance with any one of the preceding claims, **characterized in that** the guide frame (10) has openings (18) in a socket surface (17) extending perpendicular to the insertion direction (28) of the data carrier through which openings spigots (26) provided on the rear side of the front panel (20) can be plugged.

9. A built-in device in accordance with any one of the preceding claims, **characterized in that** a plurality of latch means (14, 18) of the same type, which are respectively offset with respect to one another, are provided at two oppositely disposed longitudinal sides of the guide frame (10).

10. A method for the installation of a guide frame (10) with a slot (12) for a digital data carrier to a front panel (20) for a built-in device for building into a motor vehicle,
**characterized in that**
the guide frame (10) is plugged on at the rear side of the front panel (20) and latches with latch elements (22) provided at the rear side of the front panel (20).

## Revendications

1. Appareil à encastrer pour un véhicule automobile, comprenant un panneau de façade (20) et un cadre de guidage (10) pouvant être emboîté sur le panneau de façade depuis la face arrière de celui-ci, comprenant une fente (12) pour un support de données numériques,
**caractérisé en ce que**
le cadre de guidage peut être encliqueté.

2. Appareil à encastrer selon la revendication 1,
**caractérisé en ce que**
le panneau de façade (20) présente des pattes d'encliquetage (22) faisant saillie depuis sa face arrière, qui peuvent être emboîtées dans des puits récepteurs (14) correspondants aménagés dans la face extérieure du cadre de guidage (10), et peuvent s'y enclencher.

3. Appareil à encastrer selon la revendication 1 ou 2,
**caractérisé en ce que**
des nez d'encliquetage (16) sont formés sur le cadre de guidage (10), qui peuvent être enclenchés dans des évidements correspondants (24) de pattes d'encliquetage (22) saillantes prévues à la face arrière du panneau de façade (20).

4. Appareil à encastrer selon la revendication 2,
**caractérisé en ce que**
respectivement un nez d'encliquetage élastique (16) dirigé à l'intérieur des puits est aménagé sur une paroi (15) des puits récepteurs (14), et que les pattes d'encliquetage (22) du panneau de façade (20) comportent des évidements correspondants (24) dans lesquels peuvent s'enclencher les nez d'encliquetage.

5. Appareil à encastrer selon la revendication 2 ou 4,
**caractérisé en ce que**
respectivement une paroi longitudinale (11) de la fente (12) pour un support de données numériques forme en même temps une paroi (11) des puits récepteurs (14).

6. Appareil à encastrer selon l'une des revendications 2 à 5,
**caractérisé en ce que**
les pattes d'encliquetage (22) présentent, pour l'essentiel, la forme d'une plaque rectangulaire.

7. Appareil à encastrer selon l'une des revendications 2 à 6,
**caractérisé en ce que**
les pattes d'encliquetage (22) présentent, dans une direction perpendiculaire au sens d'introduction (28) du support de données, une dimension qui correspond sensiblement à la dimension du cadre de guidage (10) dans cette même direction.

8. Appareil à encastrer selon l'une des revendications précédentes,
**caractérisé en ce que**
le cadre de guidage (10) présente des ouvertures (18) ménagées dans une surface d'embase (17) s'étendant perpendiculairement au sens d'introduction (28) du support de données, à travers lesquelles s'engagent des tenons (26) prévus à la face arrière du panneau de façade (20).

9. Appareil à encastrer selon l'une des revendications précédentes,
**caractérisé en ce que**
plusieurs moyens d'encliquetage identiques (14, 18) sont prévus sur deux côtés longitudinaux mutuellement opposés du cadre de guidage (10), de façon décalée les uns par rapport aux autres.

10. Procédé de montage d'un cadre de guidage (10) muni d'une fente (12) pour un support de données numériques sur un panneau de façade (20) d'un appareil à encastrer destiné à être monté dans un véhicule automobile,
**caractérisé en ce que**
le cadre de guidage (10) est emboîté à la face arrière du panneau de façade (20) et s'enclenche alors dans des éléments d'encliquetage (22) prévus à la face arrière du panneau de façade (20).
